# EUROPEAN PATENT SPECIFICATION

(11) **EP 1 609 817 B1**
(45) Date of publication and mention of the grant of the patent: **26.09.2007**
(21) Application number: 05011260.6
(22) Date of filing: 24.05.2005
(51) Int. Cl.: C08K 3/22, C08K 7/08, B60C 1/00

(54) **Rubber composition for tire and pneumatic tire using the same**
Kautschukzusammensetzung für Reifen und Luftreifen, der diese verwendet
Composition de caoutchouc pour pneumatique et pneumatique utilisant celle-ci

(30) Priority: 21.06.2004 JP 2004182694
(43) Date of publication of application: 28.12.2005
(73) Proprietor: SUMITOMO RUBBER INDUSTRIES, LTD., Hyogo-ken (JP); MATSUSHITA ELECTRIC INDUSTRIAL CO., LTD, Kadoma-shi, Osaka 571-8501 (JP)
(72) Inventor: Minakoshi, Akira, Chuo-ku Kobe-shi Hyogo-ken (JP); Tanimura, Hiroshi, Takatsuki-shi Osaka-fu (JP)
(74) Representative: Manitz, Finsterwald & Partner GbR

(56) References cited:
- EP-A- 1 505 112
- CN-A- 1 230 565
- CN-A- 1 368 518
- DE-A1- 2 702 099

## Description

The present invention relates to a rubber composition for a tire and a pneumatic tire, particularly a rubber composition for a tire having excellent friction on ice and a tire using the composition.

On the icy and snowy road, spike tires were used or chains were mounted on tires. Since there arised a environmental problem of mine dusts, studless tires were developed as tires for the icy and snowy road instead of spike tires and chains.

Icy and snowy road surfaces are slippery, as the friction coefficient thereof is significantly lower than normal roads. Therefore, various attempts have been made to improve studless tires, from the viewpoints of material and design. For example, a rubber composition containing diene rubber having excellent properties at low temperatures has been developed. Also, attempts have been made to improve friction on ice by obtaining the scratching effect to ice on icy and snowy road surfaces, for example, by increasing the surface edge component by changing the unevenness of the tire surface and compounding an inorganic filler having scratching effect (see JP-A-8-217918).

However, there is the problem that such studless tires are still insufficient in friction on icy and snowy road surfaces compared to a spiked tire and further improvement is desired.

EP 1 505 112 A1, which is a prior art document under Art. 54(3) and (4) EPC for DE, FR and GB, discloses a rubber composition for a tire comprising 0.5 to 30 parts by weight of a filler having at least two protuberances based on 100 parts by weight of diene rubber, wherein the average length of the protuberances is 10 µm.

CN 1230565 A relates to a composite material comprising natural rubber or synthetic rubber and four needle-type zinc oxide whiskers.

CN 1368518 A discloses a rubber composite comprising tetra-acicular zinc oxide whiskers.

DE 27 02 099 refers to the use of calcium sulphate whiskers having a ratio of length to average cross-section of at least 6:1 as filler and/or reinforcing material in rubber mixtures.

The object of the present invention is to provide a pneumatic tire with an improved friction on ice.

For the contracting states DE, FR and GB, the present invention relates to a pneumatic tire comprising a rubber composition for a tire comprising 0.5 to 30 parts by weight of a filler having at least two protuberances based on 100 parts by weight of diene rubber, wherein the average length of the protuberances is at least 50 µm.

For the contracting state SE, the present patent application relates to a pneumatic tire comprising a rubber composition for a tire comprising 0.5 to 30 parts by weight of a filler having at least two protuberances based on 100 parts by weight of diene rubber, wherein the average length of the protuberances is at least 10 µm.
Fig. 1 is an explanatory drawing of the angle X of the line connecting the tip of the protuberance and the center of the filler (inflection point) in the filler 1 having at least two protuberances used in the present invention.
Fig. 2 is an explanatory drawing of the length L of the protuberance in the filler having at least two protuberances used in the present invention.

The rubber composition for a tire of the present invention contains diene rubber as the rubber component and a filler.

As the diene rubber, any diene rubber can be used. For example, diene rubbers such as natural rubber (NR), polyisoprene rubber (IR), various polybutadiene rubbers (BR), various styrenebutadiene copolymer rubbers (SBR), acrylonitrile-butadiene copolymer rubber (NBR), butyl rubber (IIR), halogenated butyl rubber and polychloroprene rubber (CR) can be used alone or mixed in any ratio. Of these, NR and BR are preferably used as the rubber component, from the viewpoints of excellent properties at low temperatures and excellent balance of properties at low temperatures, processability and durability.

The rubber composition for a tire of the present invention contains a filler having at least two protuberances. By compounding a filler having at least two protuberances, the two or more protuberances exhibit an anchor effect, thereby preventing the filler from falling out due to stimulation and abrasion when running and bringing out micro protuberances from the rubber surface. As a result, the effect of eliminating the water film that develops between icy and snowy road surfaces and the tire and a micro-scratching effect are exhibited. Also, in the present invention, the filler also exhibits excellent effects in abrasion resistance, heat resistance and thermal conductivity, when compounded in the rubber component.

The filler has at least two, preferably at least three, protuberances. A filler having no protuberances or only one protuberance cannot exhibit the anchor effect and tends to fall out due to stimulation and abrasion when running the tire.

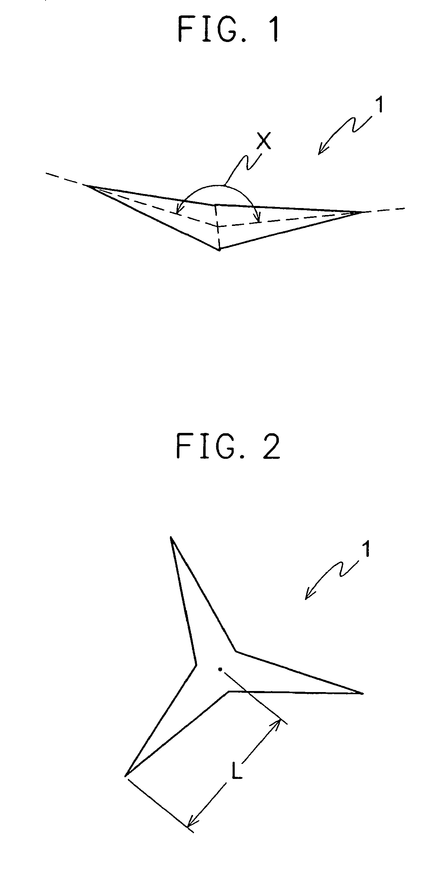

Herein, having at least two protuberances is defined as the angle X of the line connecting the tip of the protuberance and the center of the filler (inflection point) as shown in Fig. 1 being less than 180°. The angle X of a filler having one protuberance is 180° and examples are linear fillers such as fiber.

The average length of the protuberance of the filler is preferably at least 10 µm and at least 50 µm, respectively, preferably at least 100 µm. When the average length of the protuberance of the filler is less than 10 µm and 50 µm, respectively, the scratching effect to ice on icy and snowy road surfaces may be insufficient. Herein, the length of the protuberance is L shown in Fig. 2.

Examples of the filler are zinc oxide whiskers (for example, Pana-Tetra (tetrapod-shaped monocrystal of zinc oxide) available from Matsushita Electric Industrial Co., Ltd.) and star sand obtained in Okinawa. Of these, zinc oxide whiskers are preferably used, as zinc oxide whiskers are a material that is harder than ice and softer than asphalt.

The amount of the filler is at least 0.5 part by weight, preferably at least 1 part by weight, more preferably at least 5 parts by weight, based on 100 parts by weight of diene rubber. When the amount of the filler is less than 0.5 part by weight, friction on icy and snowy road surfaces is not improved. Also, the amount of the filler is at most 30 parts by weight, preferably at most 20 parts by weight. When the amount of the filler is more than 30 parts by weight, abrasion resistance decreases.

In order to improve adhesion of the filler and the diene rubber, the filler can be surface-treated with polypropylene (PP), polyethylene (PE), polystyrene (PS), polyurethane (PU), polyvinyl alcohol (PVA), a silane coupling agent or a sililation reagent.

Besides the rubber component and the filler, the rubber composition for a tire of the present invention can contain various compounding agents and additives that are compounded in rubber compositions for a tire or ordinary rubber compositions, such as a reinforcing agent (filler), a vulcanizing agent (cross-linking agent), a vulcanization accelerator, various oils, an antioxidant, a softening agent, a plasticizer, and a coupling agent. The amount of these compounding agents and additives can be the usual amount.

Examples of the reinforcing agent are inorganic fillers such as silica.

The amount of the inorganic filler is preferably at most 150 parts by weight, more preferably at most 100 parts by weight based on 100 parts by weight of diene rubber. When the amount of the inorganic filler is more than 150 parts by weight, processability tends to become poor. Also, the amount of the inorganic filler is preferably at least 5 parts by weight.

When silica is compounded, a silane coupling agent is preferably used together. The amount of the silane coupling agent is preferably at least 1 part by weight, more preferably at least 2 parts by weight, based on 100 parts by weight of the silica. When the amount of the silane coupling agent is less than 1 part by weight, viscosity of the unvulcanized rubber composition tends to become high. Also, the amount of the silane coupling agent is preferably at most 20 parts by weight, more preferably at most 15 parts by weight, based on 100 parts by weight of the silica. When the amount of the silane coupling agent is more than 20 parts by weight, the effect of adding the silane coupling agent is small, although the amount is large, and cost tends to become high.

Another example of the reinforcing agent is carbon black. The amount of carbon black is preferably at least 5 parts by weight, more preferably at least 10 parts by weight, based on 100 parts by weight of diene rubber. When the amount of carbon black is less than 5 parts by weight, sufficient reinforcing properties cannot be obtained and abrasion resistance tends to decrease. Also, the amount of carbon is preferably at most 150 parts by weight, more preferably at most 100 parts by weight. When the amount of carbon black is more than 150 parts by weight, friction on ice tends to decrease, as processability becomes poor and hardness increases.

When oil is compounded, the amount of the oil is preferably at least 5 parts by weight, more preferably at least 10 parts by weight, based on 100 parts by weight of diene rubber. When the amount of oil is less than 5 parts by weight, hardness is high and friction on ice tends to decrease. Also, the amount of oil is preferably at most 100 parts by weight, more preferably at most 70 parts by weight. When the amount of the oil is more than 100 parts by weight, abrasion resistance tends to decrease.

An example of the vulcanizing agent is sulfur. The amount of sulfur is preferably at least 0.2 part by weight, more preferably at least 0.5 part by weight, based on 100 parts by weight of diene rubber. When the amount of sulfur is less than 0.2 part by weight, cross-linking density is low and strength may not be obtained. Also, the amount of sulfur is preferably at most 10 parts by weight, more preferably at most 4 parts by weight. When the amount of sulfur is more than 10 parts by weight, friction on ice tends to decrease, as hardness increases along with increase in cross-linking density.

When a vulcanization accelerator is compounded, the amount of the vulcanization accelerator is preferably at least 0.1 part by weight, more preferably at least 1 part by weight, based on 100 parts by weight of diene rubber. When the amount of the vulcanization accelerator is less than 0.1 part by weight, the vulcanization rate is slow and productivity tends to decrease. Also, the amount of the vulcanization accelerator is preferably at most 10 parts by weight, more preferably at most 5 parts by weight. When the amount of the vulcanization accelerator is more than 10 parts by weight, rubber scorching occurs and properties tend to decrease.

By compounding a filler having at least two protuberances, wherein the average length of the protuberance is at least 10 µm, the rubber composition for a tire of the present invention exhibits the effect of eliminating water and a scratching effect on icy and snowy road surfaces due to the micro-unevenness of the rubber surface and the friction coefficient on icy and snowy road surfaces can be improved. The rubber composition is preferably used for the tread rubber of a pneumatic tire.

The pneumatic tire of the present invention can be prepared by the usual method using the rubber composition of the present invention. That is, the rubber composition of the present invention to which the above additives are compounded when necessary is extrusion processed into the shape of each member of a tire before vulcanization and then molded by the usual method on a tire molding machine to form an unvulcanized tire. The unvulcanized tire is heated and pressurized in a vulcanizer to obtain a studless tire.

Hereinafter, the present invention is explained in detail based on Examples, but the present invention is not limited thereto.

The raw materials used in Examples and Comparative Examples are described below.
Natural rubber: RSS #3 available from Tech Bee Hang Co., Ltd.
Polybutadiene rubber: UBEPOL-BR150B available from Ube Industries, Ltd.
Carbon black: SHOWBLACK N220 available from Showa Cabot Co. Ltd. Silica: Ultrasil VN3 available from Degussa Co.
Silane coupling agent: Si69 (bis(3-triethoxysilylpropyl)tetrasulfide) available from Degussa Co.
Antioxidant: NOCRAC 6C (N-1,3-dimethylbutyl-N'-phenyl-p-phenylendiamine) available from Ouchi Shinko Chemical Industrial Co., Ltd.
Wax: SUNNOC Wax available from Ouchi Shinko Chemical Industrial Co., Ltd.
Oil: Diana Process Oil PS323 available from Idemitsu Kosan Co., Ltd.
Stearic acid: Stearic acid available from NOF Corporation
Zinc oxide: Zinc Oxide type 1 available from Mitsui Mining and Smelting Co., Ltd.
Zinc oxide whiskers: Pana-Tetra A (number of protuberances: 4, average length of protuberance: 10 µm) available from Matsushita Electric Industrial Co., Ltd.
Zinc oxide whiskers: Pana-Tetra B (number of protuberances: 4, average length of protuberance: 50 µm) available from Matsushita Electric Industrial Co., Ltd.
Zinc oxide whiskers: Pana-Tetra C (number of protuberances: 4, average length of protuberance: 100 µm) available from Matsushita Electric Industrial Co., Ltd.
Sulfur: Powdery sulfur available from Tsurumi Chemicals Co., Ltd.
Vulcanization accelerator: Nocceler CZ (N-cyclohexyl-2-benzothiazolylsulfenamide) available from Ouchi Shinko Chemical Industrial Co., Ltd.

### EXAMPLES 1 to 5 and COMPARATIVE EXAMPLES 1 to 3

The components other than sulfur and the vulcanization accelerator shown in Table 1 were kneaded for 3 to 5 minutes in a 1.7 L internal banbury mixer. When the temperature reached 150°C or higher, the compound rubber was discharged to obtain base kneaded rubber. The base kneaded rubber, sulfur and the vulcanization accelerator were kneaded using an open roll and then vulcanized to obtain a rubber composition.

A tread was formed by extruding the obtained rubber composition in the shape of a tread using a calender roll by the usual method and a 195/65R15 size tire was prepared. The following tests were conducted for the obtained tire. The results are shown in Table 1.

### (Friction on ice)

The tire was mounted on a Japanese FR automobile with an engine size of 2000 cc. The braking distance at a speed of 30 km/h on a plate of ice was measured. The results were respectively represented as an index based on the braking distance of Comparative Example 1 as 100. The larger the index is, the better the friction on ice.

### (Abrasion resistance)

The tire was mounted on a Japanese FR automobile with an engine size of 2000 cc. The abrasion after running for 30,000 km was measured. The results were respectively represented as an index based on the value of Comparative Example 1 as 100. The larger the index is, the better the abrasion resistance.

**TABLE 1**

| | Example | | | | | Comparative Example | | |
|---|---|---|---|---|---|---|---|---|
| | 1* | 2 | 3 | 4 | 5 | 1 | 2 | 3 |
| Composition | | | | | | | | |
| (parts by weight) | | | | | | | | |
| Natural rubber | 60 | 60 | 60 | 60 | 60 | 60 | 60 | 60 |
| Butadiene rubber | 40 | 40 | 40 | 40 | 40 | 40 | 40 | 40 |
| Carbon black | 30 | 30 | 30 | 30 | 30 | 30 | 30 | 30 |
| Silica | 20 | 20 | 20 | 20 | 20 | 20 | 20 | 20 |
| Silane coupling | 2 | 2 | 2 | 2 | 2 | 2 | 2 | 2 |
| agent | | | | | | | | |
| Oil | 20 | 20 | 20 | 20 | 20 | 20 | 20 | 20 |
| Wax | 2 | 2 | 2 | 2 | 2 | 2 | 2 | 2 |
| Antioxidant | 2 | 2 | 2 | 2 | 2 | 2 | 2 | 2 |
| Stearic acid | 2 | 2 | 2 | 2 | 2 | 2 | 2 | 2 |
| Zinc oxide | 3 | 3 | 3 | 3 | 3 | 3 | 3 | 3 |
| Zinc oxide whiskers 1 | 10 | - | - | - | - | - | - | - |
| Zinc oxide whiskers 2 | - | 10 | - | - | - | - | - | - |
| Zinc-oxide whiskers 3 | - | - | 10 | 5 | 20 | - | 0.2 | 40 |
| Sulfur | 1.5 | 1.5 | 1.5 | 1.5 | 1.5 | 1.5 | 1.5 | 1.5 |
| Vulcanization accelerator | 1.5 | 1.5 | 1.5 | 1.5 | 1.5 | 1.5 | 1.5 | 1.5 |

| Evaluation results | | | | | | | | |
|---|---|---|---|---|---|---|---|---|
| Friction on ice | 108 | 116 | 125 | 112 | 129 | 100 | 102 | 127 |
| Abrasion resistance | 97 | 96 | 94 | 100 | 90 | 100 | 100 | 77 |

| | | | | | | | | |
|---|---|---|---|---|---|---|---|---|
| * not according to the invention for the contracting states DE, FR and GB | | | | | | | | |

The results of Table 1 show that in Examples 1 to 5, wherein a specific amount of zinc oxide whiskers in which the average length of the protuberances is at least 10 µm and 50 µm, respectively, are compounded, friction on ice is improved while maintaining abrasion resistance.

In Comparative Example 2 wherein zinc oxide whiskers 3 were compounded but the amount thereof was small, the effect of improving friction on ice was small. In Comparative Example 3 wherein the amount was large, abrasion resistance decreased significantly.

According to the present invention, by compounding a filler having at least two protuberances, wherein the average length of the protuberances is at least 10 µm and 50 µm, respectively, in diene rubber, a studless tire having excellent friction on ice can be obtained, by the effect of eliminating the water film that develops between the tire and the icy and snowy road surfaces and the scratching effect on icy and snowy road surfaces.

## Claims (Claims for the following Contracting State(s): DE, FR, GB)

1. A pneumatic tire comprising a rubber composition for a tire comprising 0.5 to 30 parts by weight of a filler having at least two protuberances based on 100 parts by weight of diene rubber;
the average length of said protuberances being at least 50 µm.

## Claims (Claims for the following Contracting State(s): SE)

1. A pneumatic tire comprising a rubber composition for a tire comprising 0.5 to 30 parts by weight of a filler having at least two protuberances based on 100 parts by weight of diene rubber;
the average length of said protuberances being at least 10 µm.

## Patentansprüche (Patentansprüche für folgende(n) Vertragsstaat(en): DE, FR, GB)

1. Luftreifen enthaltend eine Kautschukzusammensetzung für einen Reifen enthaltend 0.5 bis 30 Gewichtsteile eines Füllstoffes mit wenigstens zwei Protuberanzen basierend auf 100 Gewichtsteilen Dienkautschuk, wobei die Durchschnittslänge der Protuberanzen wenigstens 50 µm beträgt.

## Patentansprüche (Patentansprüche für folgende(n) Vertragsstaat(en): SE)

1. Luftreifen enthaltend eine Kautschukzusammensetzung für einen Reifen enthaltend 0.5 bis 30 Gewichtsteile eines Füllstoffes mit wenigstens zwei Protuberanzen basierend auf 100 Gewichtsteilen Dienkautschuk, wobei die Durchschnittslänge der Protuberanzen wenigstens 10 µm beträgt.

## Revendications (Revendications pour l'(les) Etat(s) contractant(s) suivant(s): DE, FR, GB)

1. Pneumatique comprenant une composition de caoutchouc pour pneumatique comprenant 0,5 à 30 parties en poids d'une charge ayant au moins deux protubérances sur la base de 100 parties en poids d'un caoutchouc de diène ;
la longueur moyenne desdites protubérances étant d'au moins 50 µm.

## Revendications (Revendications pour l'(les) Etat(s) contractant(s) suivant(s): SE)

1. Pneumatique comprenant une composition de caoutchouc pour pneumatique comprenant 0,5 à 30 parties en poids d'une charge ayant au moins deux protubérances sur la base de 100 parties en poids d'un caoutchouc de diène ;
la longueur moyenne desdites protubérances étant d'au moins 10 µm.
